# EUROPEAN PATENT SPECIFICATION

(11) **EP 1 483 635 B1**
(45) Date of publication and mention of the grant of the patent: **14.01.2009**
(21) Application number: 03743893.4
(22) Date of filing: 07.03.2003
(51) Int. Cl.: G05B 19/408

(54) **REDUNDANCY IN PROCESS CONTROL SYSTEM**
REDUNDANZ IN EINEM PROZESSSTEUERSYSTEM
REDONDANCE DANS UN SYSTEME DE CONTROLE DE PROCESSUS

(30) Priority: 11.03.2002 FI 20020453
(43) Date of publication of application: 08.12.2004
(73) Proprietor: Metso Automation Oy, 00880 Helsinki (FI)
(72) Inventor: LAHTINEN, Esa, FIN-33100 Tampere (FI); KARAILA, Mika, FIN-33730 Tampere (FI)
(74) Representative: Grünecker, Kinkeldey, Stockmair & Schwanhäusser Anwaltssozietät
(86) International application number: PCT/FI2003/000176
(87) International publication number: WO 2003/077050

(56) References cited:
- EP-A2- 0 927 942
- WO-A1-00/23857
- WO-A1-01/40882
- US-A- 5 682 476
- US-A- 5 948 108

## Description

The invention relates to arranging redundancy in a process control system.

In an industrial process, a highly automatized system is used for ensuring that the process operates in a correct manner. An industrial process, such as a paper making process or a power station process, is very extensive and complex, including many variables. An information system used for controlling an industrial process is responsible for various tasks relating to collecting, distributing, storing and presenting process properties as well as to process control. A process control system typically comprises a large number of work stations that operate independently or controlled by an operator. Such work stations carry out different process control related tasks, such as processing of measurement data and storage of historical data, according to the applications to be executed in the work stations.

Conventionally, process control systems have employed proprietary hardware and software solutions, in which case devices from different manufacturers are unable to communicate with each other. In such a case, it has been necessary to determine proprietary interfaces for applications in order to access data of different devices. In the process control industry, several standards have thus been developed to determine open communication interfaces to be used between the different devices of a process control system. An example of such an open standard is OPC (Object Linking and Embedding for Process Control). The OPC provides a set of interfaces, properties and methods based on ActiveX/COM (Component Object Model) technologies to be used for process control applications. A bus solution supporting the OPC standard comprises OPC clients and OPC servers. The OPC servers may communicate with proprietary devices and transfer data to different OPC clients that forward data to applications utilizing the data. The OPC enables a common interface to be provided for the applications so as to enable access to the data of different process control devices.

The functionality of OPC servers serving up to dozens of OPC clients thus plays a crucial role in the information system. In order to ensure the functionality of a system, redundancy of OPC servers may thus be arranged by doubling, meaning that in addition to a primary OPC server, the system is also provided with a secondary OPC server. Such a redundancy arrangement has been disclosed in WO 0 023 857, the solution according to the publication comprising switching over to using the secondary OPC server when the primary OPC server is no longer available. The secondary server may start carrying out the tasks of the primary server without the client devices noticing the change (the logical connection provided for the client device remains unchanged although the server device providing the connection changes). The solution disclosed in WO 0 023 857 does not, however, take any other error situations but server or connection failure into account, thus providing limited redundancy. Even if a server were working correctly, the connection e.g. between the server and a field or another device connected thereto may be completely lost or otherwise subjected to interference.

An object of the invention is to provide an improved redundancy solution for process control systems. The objects of the invention are achieved by a method, a process control system, a process control system device and a computer program which are characterized by what has been disclosed in the independent claims. Preferred embodiments of the invention are disclosed in the dependent claims.

The idea underlying the invention is that a client device is provided with at least two parallel logical connections for transferring substantially the same data between at least one data source and the client device. Property information on parallel data units transferred via different logical connection is checked at the client device and compared. The client device is provided with predetermined order criteria according to which the parallel data units can be arranged in order of superiority. Parallel data units refer to data units whose payload to be used by an application is exactly or substantially the same. Data units delivered via the logical connection having, according to the predetermined order criteria, the best property information are selected for the use of one or more applications processing the data units. A logical connection refers to an arrangement formed by at least two data transfer entities for transferring data in a process control system; parallel logical connections are not necessarily arranged via physically separate data transfer devices. Data transfer via a logical connection may be either circuit- or packet-switched.

An advantage of the arrangement of the invention is that it is always possible to select the best ones from among parallel data units transferred via parallel connections. This enables redundancy to be arranged so as to also takes into account problems in data transfer that impair the quality of the data units transferred. Redundancy based on comparing the property information on parallel data units provides high-speed action as far as the application using the data units is concerned also when some of the connections fails, i.e. a delay caused by activating a new, substitutive connection (e.g. via a secondary server) is avoided.

According to a preferred embodiment of the invention, the property information to be compared consists of quality information associated by a server device supporting the OPC standard to OPC items, and the predetermined order criteria are based on arranging quality levels determined in different OPC specifications in order of superiority. This enables quality data fields determined already in the OPC specifications to be utilized in the redundancy of OPC connections.

According to yet another preferred embodiment of the invention, the property information to be compared consists of time stamps of the data units, and at the client device, the data units that have the most recent time stamps are selected from among the parallel data units of the logical connections. This enables the most recent possible information to be provided for the application. This embodiment may also complement the comparison of quality information preferably when, according to the quality information, parallel data units are equal.

The invention is now described in closer detail in connection with the preferred embodiments and with reference to the accompanying drawings, in which

Figure 1 is a block diagram generally showing a process control system;

Figure 2 is a block diagram showing the operational structure of a server of a process control system according to a preferred embodiment of the invention;

Figure 3 is a block diagram showing a method of a preferred embodiment of the invention;

Figure 4 is a block diagram showing a redundancy configuration according to a first embodiment;

Figure 5 is a block diagram showing a redundancy configuration according to a second embodiment; .

Figure 6 is a block diagram showing a redundancy configuration according to a third embodiment; and

Figure 7 is a block diagram showing a redundancy configuration according to a fourth embodiment.

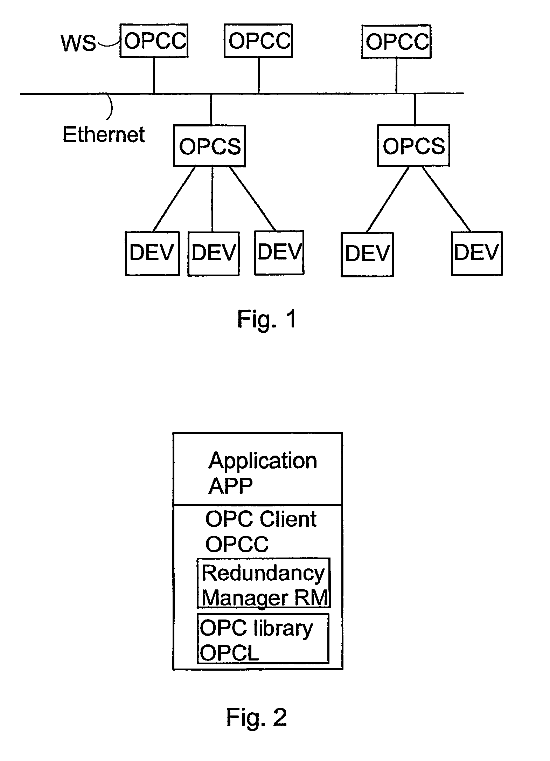

Referring to the example in Figure 1, a process control system comprises OPC clients OPCC, OPC servers OPCS, and devices DEV connected to the OPC servers. According to the applications to be executed therein, work stations WS comprising an OPC client OPCC may carry out various tasks: They may operate e.g.. as engineering workstations, backup workstations, process control servers, diagnostics servers, operator servers or as alarm servers. Database workstations transferring data from a process and control information to the process are typically called process control servers.

An OPC server OPCS may be connected to a large variety of devices DEV, which usually require a proprietary interface. The devices DEV may be e.g. field devices, I/O units connected to field devices, databases, system bus devices, such as process control servers or OPC servers of other systems. An OPC server OPCS provides an interface for data sources, OPC items, and controls them. An OPC server OPCS is any server device providing one or more OPC interfaces, including at least an OPC data transfer interface (OPC DataAccess) for reading and writing data, an OPC alarm and event interface (OPC Alarm&Event) for indicating specified alarms and events to the OPC client OPCC, and an OPC historical data interface (OPC HistoricalData) for reading, processing and editing historical data. It is to be noted that in addition to the above-mentioned functions, also other OPC functionalities may be developed. OPC clients OPCC and OPC servers OPCS communicate e.g. over the Ethernet network.

Devices providing functions (OPCC, OPCS) according to a preferred embodiment comprise a memory, a user interface (typically at least a display, a keyboard and a mouse), means for transferring data (typically a network interface card and software controlling data transfer) and a central processing unit CPU comprising one or more processors. An information system may, however, also comprise devices to be controlled via a network, comprising no user interface. The memory comprises a non-volatile part for storing program code controlling the CPU and other data to be stored, and a volatile part for storing data temporarily.

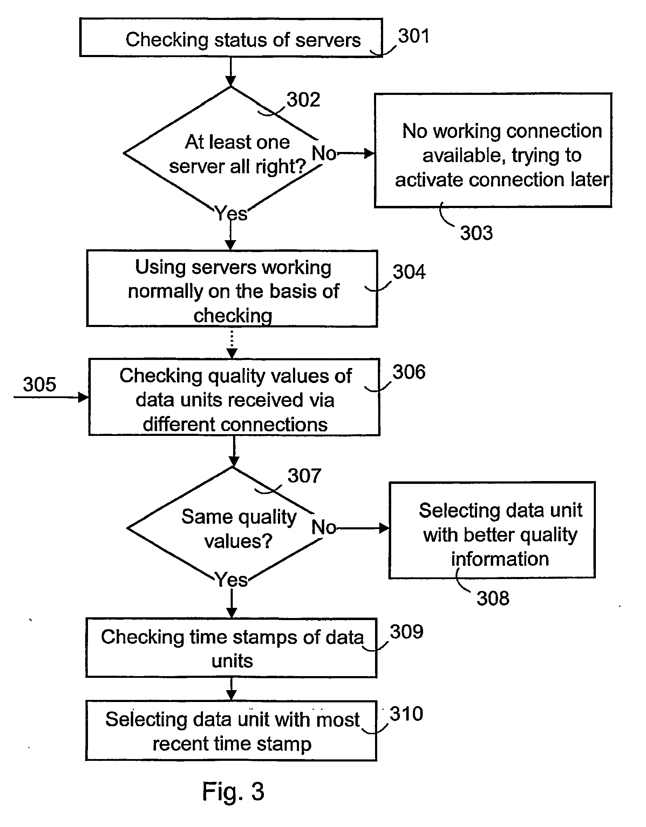

Figure 2 illustrates the operational structure of a device (WS) comprising an OPC client functionality of a process control system according to a preferred embodiment. The device comprises one or more applications APP and an OPC client functionality OPCC. The OPC client functionality OPCC comprises an OPC redundancy functionality (Redundancy Manager RM) and an OPC library OPCL. The application APP may be e.g. a display application, a trend application or a report application. The OPC client functionality OPCC is responsible for communicating with the OPC server OPCS, using the OPC libraries OPCL. The OPC client functionality OPCC may, utilizing data transfer protocols of lower layers (typically TCP/IP/Ethernet), arrange several parallel logical OPC connections with one or more OPC servers OPCS. The redundancy manager RM according to a preferred embodiment is responsible for estimating parallel logical connections in a manner illustrated in closer detail in Figure 3. The blocks illustrated in Figure 2 may be implemented by computer program code to be executed in one or more central processing units CPU of the workstation WS, the computer program code being able to use a conventional operating system.

Figure 3 illustrates a redundancy method according to a preferred embodiment, implemented by an OPC client functionality OPCC and preferably the redundancy manager RM illustrated in Figure 2. Preferably, the status of the servers OPCS is checked 301 when the interface of the OPC servers OPCS is to be used, e.g. when information indicated by OPC data items is to be retrieved using an OPC data transfer interface. Step 301 can also be carried out at other times, e.g. in connection with setting up logical connections, or at predetermined intervals. The status of the servers OPCS may be checked 301 separately by requesting (GetStatus) status information on the OPC servers OPCS (OPC SERVER STATUS) or by checking the status information provided by the servers OPCS automatically. If the status information (OPCSERVERSTATE) indicates that the OPC server operates normally, i.e. the value is OPC_STATUS_RUNNING, the server is in proper condition. Preferably, in connection with all other status information values, the server is interpreted to be out of order.

If, on the basis of the checking 301, 302, not a single working server OPCS is available, no OPC interface is available 303 for the OPC client OPCC. In such a case, it is possible to retry to activate 303 a logical connection later. Otherwise, the OPC client OPCC selects for its use 304 one or more servers OPCS that, on the basis of the checking, operate normally.

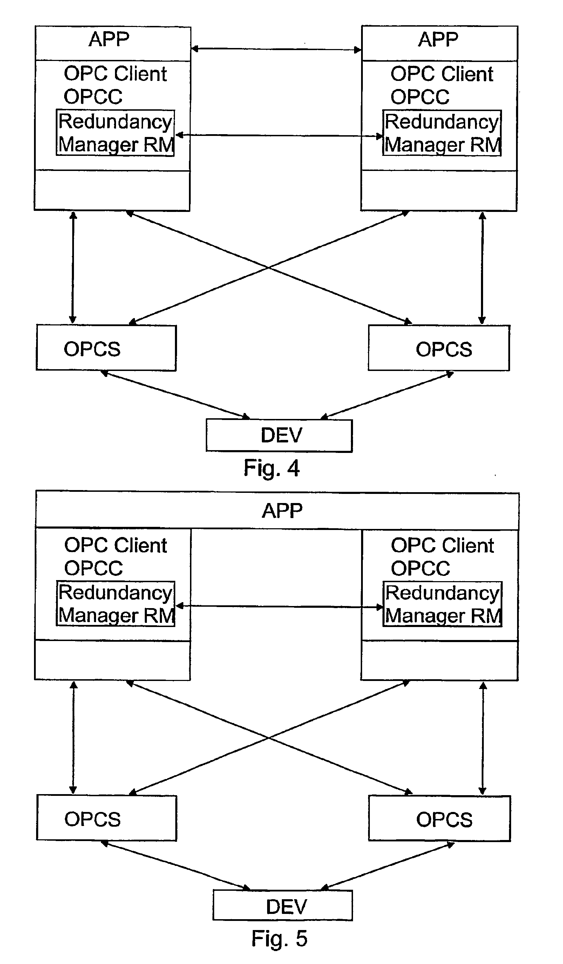

In order to ensure redundancy for data transfer to be provided for one or more applications APP, at least two parallel logical connections are arranged to transfer substantially the same data units from the same device DEV. Typically, but not necessarily, these parallel connections are arranged via different servers OPCS. Different configurations enabling the redundancy to be arranged will be illustrated in closer detail below in connection with Figures 4 to 7. When the client OPCC receives 305 data units transferred via different connections, e.g. data of OPC items of an OPC data transfer interface, the quality information on the received data units carrying the same payload is checked 306.

If, on the basis of the checking and comparison 306, 307, the quality values are different, a data unit whose quality information indicates that it is of higher quality than other data units parallel therewith is selected 308 to be provided for the application APP. The process may thus move to step 308 if a data unit is found which has a better quality value than that of any other parallel data unit. If at least two data units exist that have the same quality values that are better than those of possible other data units, the process moves to step 309. If in step 305 no parallel data units are received at all via a logical connection, the particular logical connection is interpreted to be defective, in which case data units of parallel logical connections are selected to be used 308.

According to a preferred embodiment, the quality information to be compared consists of quality information determined by the server OPCS for quality bit fields of OPC items. Quality information can be determined for the OPC items on the basis of quality statuses available at the OPC data transfer interface. Quality bits indicating quality information are arranged in the following manner:
QQSSSSLL.

QQ bits determine three possible quality statuses (bad, good, uncertain). SSSS bits are substatus bits whose different values enable each quality status to be further defined. LL bits are limit bits that may provide diagnostic information. Data units can be arranged in order of superiority by utilizing any order criteria predetermined for the OPC client OPCC. All (comparing the QQSSSSLL bit combinations of parallel OPC items) or only some of the quality bits determined in the OPC specifications for the OPC items can be used in the comparison. It is also possible to determine new fields for determining the status of data units and to use them for comparing parallel data units. According to a preferred embodiment, QQ bits are used in the comparison, in which case the predetermined order criteria from the best to the worst are 'Good' → 'Uncertain' → 'Bad'. Consequently, the data units which, according to the QQ bits, have 'Good' as the quality status, have better properties than the rest of the data units. If the quality statuses of two parallel data units are 'Uncertain' and 'Bad', the best one, i.e. the data unit having the status 'Uncertain', is selected to be used. According to a preferred embodiment, the comparison uses bits QQSSSS, i.e. the values of the QQSSSS bits of different OPC items are compared. In such a case, the comparison of the substatus bits SSSS further defines the quality statuses of the QQ bits, the comparison preferably being carried out if parallel data units have the same QQ bit status. It is also possible that the client OPCC selects for use the data units of those logical connections only whose quality information indicates good quality, i.e. whose value is 'Good'.

In step 309, the time stamps of the data units to be compared are checked. Preferably, only the data units that have the best quality values are selected for step 309, preferably only the data units that have the OPC quality status 'Good'. If the best quality status is 'Bad', it can also be used. Particularly if a data unit has a 'Last Known Value' (the bit value being 000101 LL) as its substatus, it may still be usable since in spite of unsuccessful communication, the last known value is still available. Typically, the OPC server OPCS has added a time stamp to the OPC data unit. The time stamp may indicate e.g. the point of time at which a measurement value contained in the payload was measured. In a data structure OPCITEMSTATE describing the status of an OPC item, a time stamp may be provided either by a device (DEV) or a server OPCS. If the device DEV supports time stamps, it may determine the time stamp of the OPC data unit, it may e.g. timestamp the measurement value.

On the basis of the checking 309, a data unit having the most recent time stamp is selected. This data unit is transferred to be used by one or more applications APP processing the data units. The application APP is thus always provided with one data unit which is as high-quality and new as possible. The way in which the application APP processes the received data unit depends on the application and is irrelevant to the invention.

Thus, the redundancy of transfer of a necessary data unit from the device DEV, e.g. a setting or measurement value, can thus be implemented by utilizing the quality and/or time information on the data units. It is also possible to transfer data from the client OPCC to the server OPCS via parallel logical connections. If the logical connections are arranged via different servers, each server is provided with the same data. In such a case, however, preferably only one server OPCS writes further to the device DEV.

According to a preferred embodiment, steps 306 to 310 illustrated in Figure 3 are performed on each group of data units formed by parallel data units containing substantially the same payload. After step 310, the process may thus start waiting for the next data unit to be received and compare it with parallel data units transferred via other logical connections. It is also possible to perform steps 306 to 310 only on some of the received data unit groups: For example, checking is performed on every fifth received data unit group, wherein a data unit is selected, according to step 308 or 310. Next, the next four data units received via the same logical connection as the data unit selected on the basis of the checking can be automatically selected to be delivered to the application.

The order of superiority of the data units (on the basis of quality information or some other property information on the data units) can be determined in accordance with the configuration, which enables order criteria for different purposes and situations to be customized in a versatile manner. The order criteria to be used and the application thereof can be selected e.g. on the basis of the data to be transferred. Different applications APP could also be provided with different order criteria according to which the superiority of parallel data units is to be determined.

The functionality illustrated in Figures 2 and 3 enables the redundancy of data transfer to be centralized in the redundancy manager RM of the OPC client OPCC, and no redundancy functionality needs to be arranged in the OPC servers OPCS or applications APP (if desired, additional redundancies can naturally also be provided between applications and servers). Consequently, a preferred embodiment of the invention does not require any additional functionality in the OPC servers OPCS or in the devices DEV connected to the OPC servers.

It is to be noted that the client OPCC (redundancy manager RM) may implement only some of the steps illustrated in Figure 3. For example, the server checking and selection in steps 301 to 304 is by no means necessary, and no time stamps necessarily need to be used for selecting data units (neither do all time units necessarily have usable time stamps).

Figure 4 illustrates a redundancy configuration according to a first embodiment, wherein redundancy is arranged for an OPC server OPCS (including connections to one or more devices DEV), an OPC client functionality OPCC and an application APP. The servers OPCS provide both OPC clients OPCC with the same data units. Preferably in the manner illustrated in Figure 3, the OPC clients OPCC select a server and the best ones from among the parallel data units on the basis of the property information on the parallel data units and the predetermined order criteria (on the basis of quality and/or time stamp information) and transmit them to the applications APP. In the embodiment of Figure 4, preferably one of the applications APP is active, in which case the passive application and the data units provided thereto by the OPCC are used when problems are detected in the operation of the active application. Preferably, the application used in the OPCC is such an application which uses a connection the data units transferred via which connection are the data units that, on the basis of the property information on the data units, are the best ones. The embodiment of Figure 4 enables redundancy to be arranged for the connection between the server OPCS and the device DEV, the connection between the server OPCS and the client OPCC, redundancy managers RM and applications APP.

Figure 5 illustrates a redundancy configuration according to a second embodiment, wherein an application APP utilizes two OPC client functionalities OPCC. Redundancy is thus arranged for the OPC server OPCS and the OPC client functionality OPCC. The redundancy manager RM may operate as illustrated in Figure 3, i.e. it may always select data units delivered to the OPCC via a better logical connection for the application APP. The application APP selects, according to its own criteria, a data unit delivered by another OPCC for its use. The APP may select the data unit on the basis of the properties of its payload, e.g. on the basis of the time stamp determined in the payload. In the embodiments disclosed in Figures 4 and 5, it must be ensured that only one of the clients OPCC transmits data (write connection) back to the servers OPCS and further to one or more devices DEV.

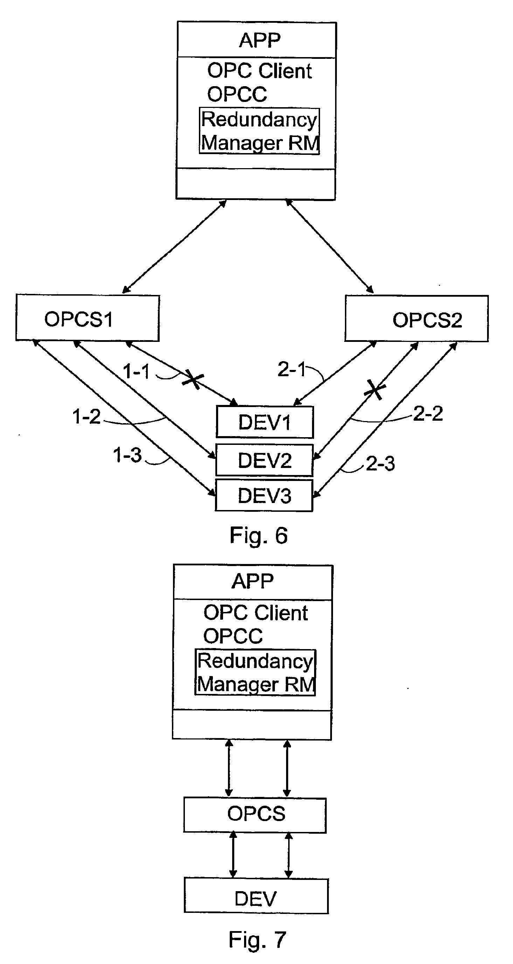

Figure 6 illustrates a redundancy configuration according to a third embodiment, wherein redundancy is arranged for OPC servers OPCS1, OPCS2, thus providing an OPC client OPCC with parallel logical connections. The RM may select a data unit, preferably in the manner illustrated in steps 305 to 310 in Figure 3. Figure 6 illustrates a situation wherein the client device OPCC has a need to receive data units from three devices DEV1, DEV2 and DEV3. Three connection pairs are then formed: 1-1, 2-1; 1-2, 2-2 and 1-3, 2-3. In the example of Figure 6, it is detected, preferably on the basis of the checking illustrated in Figure 3, that the data units transferred to the device DEV1 via the connection 1-1- used by the OPC server OPCS1 are of poor quality, or that they are missing altogether, in which case the connection 2-1 of the server OPCS2 and the data units transferred therethrough are used in the application APP of the OPC client device OPCC. However, the connection 2-2 provided by the server OPCS2 for the device DEV2 is defective, so the OPCC selects the data units transferred from the device DEV2 via the connection 1-2 and the server OPCS1 to be used by the application APP. From the device DEV3, the connections 1-3 and 2-3 are in proper condition, and it is assumed that the data units transferred via the particular connections also otherwise remain equal in quality, which always enables the OPCC to select the most recent data unit for the application APP. Thus, according to a preferred embodiment, the OPCC may use several different servers for transferring data units transferred from different devices, whereby it is always possible to arrange data transfer via a parallel logical connection when a logical connection (or a server) fails.

Figure 7 illustrates a redundancy configuration according to a fourth embodiment, wherein two parallel logical connections are provided via a server OPCS for transferring data of a device DEV (one or more). This enables redundancy to be arranged particularly for the connection between the server OPCS and the device DEV as well as for the connection between the server OPCS and a client OPCC.

It is to be noted that in addition to the configurations shown in Figures 4 to 7, several other configurations may also exist wherein the present redundancy method can be utilized. In the embodiment of Figure 7, for example, wherein the parallel logical connections are arranged via one server OPCS, two applications APP instead of one application APP may be provided, as illustrated in Figure 4.

The redundancy method illustrated above may be utilized at any OPC interface the data units according to which comprise quality and/or time information. A server OPCS providing an OPC data transfer interface (OPC DataAccess) comprises several objects: server, group and item. An OPC server object maintains information on the server and stores OPC group objects. Through adding, removing and modifying the OPC group objects, a client OPCC is able to organize information according to the needs of applications APP. An OPC group object maintains information on itself and provides means for adding, removing and organizing OPC items. A group may e.g. present a certain report which an operator monitoring a process desires to get about a part of the process. A group thus determines several OPC items that in a group identify the data source from which the data is obtained. The information indicated by the OPC item may be e.g. a process value or a set value. The OPC client OPCC may determine e.g. a certain time interval during which information is retrieved from the data sources indicated by the OPC items determined by the group. If necessary, the OPCS retrieves information typically via proprietary interfaces from one or more devices DEV (a software interface and/or a hardware interface) and organizes the information into a format determined by an OPC data transfer interface specification. The information indicated by the OPC item can then be transmitted to the client OPCC. This can be called OPC item transfer to OPC client OPCC, the OPC data unit to be transferred providing the client with a value (data contained in the address), quality, time stamp and a data type. It is also possible for the OPC client OPCC to write to the address indicated by the OPC item. Data units provided by the OPC alarm and event interface (OPC Alarm&Event) or the OPC historical data interface (OPC HistoricalData) may also comprise quality information and/or time stamps that can be utilized in redundancy as described above.

It is obvious to one skilled in the art that as technology advances, the basic idea of the invention can be implemented in many different ways. The invention and its embodiments are thus not restricted to the above-described examples but may vary within the scope of the claims. In addition to the OPC standard interfaces described above, the invention can also be applied in connection with other interfaces, e.g. in a protocol called DAIS (Data Acquisition from Industrial Systems) of an OMG (Object Management Group) protocol.

## Claims

1. A method for arranging redundancy in a process control system comprising at least one client device, at least one data source and at least one server device providing data transfer between the client device and the data source, comprising the step of:
arranging, for the client device, at least two parallel logical connections for transferring substantially the same data between at least one data source and the client device,
**characterized by** the steps of
checking (306), at the client device, property information on data units transferred via different logical connections, the client device being provided with predetermined order criteria for the property information,
comparing (307), at the client device, property information on parallel data units transferred via different logical connections, and
selecting (308, 310) data units delivered via the logical connection having, according to the predetermined order criteria, the best property information for the use of one or more applications processing the data units.

2. A method as claimed in claim 1, **characterized by** arranging the logical connections between the client device and the server device according to an OPC standard.

3. A method as claimed in claim 2, **characterized by** the property information to be compared consisting of quality information determined by the server device for quality bit fields of OPC items, and using, at the client device, the OPC items of the logical connection whose quality information indicates the best quality.

4. A method as claimed in claim 3, **characterized by** selecting (308) the OPC items on the basis of quality statuses in the following order of superiority, from the best quality to the worst quality: 'Good' -> 'Uncertain' ->'Bad'.

5. A method according to any of claims 1 to 4, wherein the property information to be compared consisting of time stamps of the data units, and selecting (310), at the client device, the data units of the logical connection whose time stamps are the most recent ones.

6. A method as claimed in claim 5, **characterized by** first comparing the quality information on the data units, and comparing the time stamps in response to the quality information indicating that different data units are equal in quality.

7. A method according to any of claims 1 to 6, **characterized by**
arranging, in the client device, at least two parallel applications to implement the parallel connections, and
using, at the client device, such an application which uses a connection the data units transferred via which connection are, on the basis of the property information on the data units, the best ones.

8. A method as claimed in any one of claims 1 to 6, **characterized by**
arranging, in the client device, at least two parallel client interfaces to implement the parallel connections, and
which are, on the basis of their property information, the best ones.

9. A method according to any of claims 1 to 8, **characterized by**
arranging the parallel connections via different server devices, thereby
checking (302) the server statuses of different server devices before comparing the property information on the data units, and
comparing (308, 310) the property information only on the data units transferred via the server units whose status indicates that the server units operate normally.

10. A device of a process control system, comprising a client device functionality for communicating with at least one server device providing data transfer in the process control system between the device and a data source, the device is arranged to set up at least two parallel logical connections for transferring substantially the same data from at least one data source,
**characterized in that**
the device is arranged to check property information on data units received via different logical connections, the device being provided with predetermined order criteria for the property information,
the device is arranged to compare property information on parallel data units transferred via different logical connections, and
the device is arranged to select data units delivered via the logical connection having, according to the predetermined order criteria, the best property information for the use of one or more applications processing the data units.

11. A device as claimed in claim 10, **characterized in that** the property information compared by the device consists of quality information determined by the server device for quality bit fields of OPC items.

12. A device as claimed in claim 10 or 11, **characterized in that** the property information compared by the device consists of time stamps of the data units.

13. A process control system comprising:
at least one client device according to any of claims 10 to 12,
at least one data source,
at least one server device providing data transfer between the client device and the data source, wherein
at least two parallel logical connections are arranged for the client device for transferring substantially the same data from at least one data source.

14. A computer program downloadable into a memory of a computer for controlling at least one device of a process control system, the computer program comprises:
computer program code for arranging at least two parallel logical connections for transferring substantially the same data between at least one data source and the device via at least one server device,
**characterized by**
computer program code for checking (306) property information on data units transferred via different logical connections,
computer program code for comparing (307) property information on parallel data units transferred via different logical connections, and
computer program code for selecting (308, 310) data units according to a predetermined order criteria, the best property information for the use of one or more applications processing the data units.

## Patentansprüche

1. Verfahren zum Einrichten von Redundanz in einem Prozesssteuerungssystem, das wenigstens eine Client-Vorrichtung, wenigstens eine Datenquelle und wenigstens eine Server-Vorrichtung umfasst, die Datenübertragung zwischen der Client-Vorrichtung und der Datenquelle ermöglicht, wobei es den folgenden Schritt umfasst:
Einrichten wenigstens zweier paralleler logischer Verbindungen für die Client-Vorrichtung zum Übertragen im Wesentlichen der gleichen Daten zwischen wenigstens einer Datenquelle und der Client-Vorrichtung,
**gekennzeichnet durch** die folgenden Schritte:
Prüfen (306) von Eigenschaftsinformationen über Dateneinheiten, die über verschiedene logische Verbindungen übertragen werden, an der Client-Vorrichtung, wobei die Client-Vorrichtung mit vorgegebenen Reihenfolgekriterien für die Eigenschaftsinformationen versehen ist,
Vergleichen (307) von Eigenschaftsinformationen über parallele Dateneinheiten, die über verschiedene logische Verbindungen übertragen werden, an der Client-Vorrichtung, und
Auswählen (308, 310) über die logische Verbindung zugeführter Dateneinheiten, die entsprechend den vorgegebenen Reihenfolgekriterien die besten Eigenschaftsinformationen für die Nutzung einer oder mehrerer Anwendungen aufweisen, die die Dateneinheiten verarbeiten.

2. Verfahren nach Anspruch 1, **gekennzeichnet durch** Einrichten der logischen Verbindungen zwischen der Client-Vorrichtung und der Server-Vorrichtung gemäß einem OPC-Standard.

3. Verfahren nach Anspruch 2, **dadurch gekennzeichnet, dass** die zu vergleichenden Eigenschaftsinformationen aus Qualitätsinformationen bestehen, die durch die Server-Vorrichtung für Qualitäts-Bitfelder von OPC-Elementen bestimmt werden, und Verwenden der OPC-Elemente der logischen Verbindung, deren Qualitätsinformationen die beste Qualität anzeigen, an der Client-Vorrichtung.

4. Verfahren nach Anspruch 3, **gekennzeichnet durch** Auswählen (308) der OPC-Elemente auf Basis von Qualitätszuständen in der folgenden Rangfolge von der besten Qualität bis zu der schlechtesten Qualität:
"Gut" → "Unsicher" → "Schlecht".

5. Verfahren nach einem der Ansprüche 1 bis 4, wobei die zu vergleichenden Eigenschaftsinformationen aus Zeitstempeln der Dateneinheiten bestehen, und die Dateneinheiten der logischen Verbindung ausgewählt werden (310), deren Zeitstempel die aktuellsten sind, an der Client-Vorrichtung.

6. Verfahren nach Anspruch 5, **dadurch gekennzeichnet, dass** zuerst die Qualitätsinformationen über die Dateneinheiten verglichen werden und die Zeitstempel in Reaktion darauf verglichen werden, dass die Qualitätsinformationen anzeigen, dass verschiedene Dateneinheiten gleiche Qualität haben.

7. Verfahren nach einem der Ansprüche 1 bis 6, **gekennzeichnet durch**
Einrichten wenigstens zweier paralleler Anwendungen in der Client-Vorrichtung, um die parallelen Verbindungen zu implementieren, und
Nutzen einer Anwendung, die eine Verbindung verwendet, wobei die Dateneinheiten, die über die Verbindung übertragen werden, auf Basis der Eigenschaftsinformationen über die Dateneinheiten die besten sind.

8. Verfahren nach einem der Ansprüche 1 bis 6, **gekennzeichnet durch**
Einrichten wenigstens zweier paralleler Client-Schnittstellen zum Implementieren der parallelen Verbindungen in der Client-Vorrichtung,
welche auf Basis ihrer Eigenschaftsinformationen die besten sind.

9. Verfahren nach einem der Ansprüche 1 bis 8, **gekennzeichnet durch**
Einrichten der parallelen Verbindungen über verschiedene Server-Vorrichtungen, um so
die Server-Zustände unterschiedlicher Server-Vorrichtungen zu prüfen (302), bevor die Eigenschaftsinformationen über die Dateneinheiten verglichen werden, und
die Eigenschaftsinformationen nur über die Dateneinheiten zu vergleichen (308, 310), die über die Server-Einheiten übertragen werden, deren Zustand anzeigt, dass die Servereinheiten normal arbeiten.

10. Vorrichtung eines Prozesssteuerungssystems, die eine Clientvorrichtungs-Funktionalität zum Kommunizieren mit wenigstens einer Server-Vorrichtung umfasst, die Datenübertragung in dem Prozesssteuerungssystem zwischen der Vorrichtung und einer Datenquelle ermöglicht, wobei die Vorrichtung so eingerichtet ist, dass sie wenigstens zwei parallele logische Verbindungen zum Übertragen im Wesentlichen der gleichen Daten von wenigstens einer Datenquelle herstellt,
**dadurch gekennzeichnet, dass**
die Vorrichtung so eingerichtet ist, dass sie Eigenschaftsinformationen über Dateneinheiten prüft, die über verschiedene logische Verbindungen empfangen werden, wobei die Vorrichtung mit vorgegebenen Reihenfolgekriterien für die Eigenschaftsinformationen versehen ist,
die Vorrichtung so eingerichtet ist, dass sie Eigenschaftsinformationen über parallele Dateneinheiten vergleicht, die über verschiedene logische Verbindungen übertragen werden, und
die Vorrichtung so eingerichtet ist, dass sie über die logische Verbindung zugeführte Dateneinheiten auswählt, die entsprechend den vorgegebenen Reihenfolgekriterien die besten Eigenschaftsinformationen für die Nutzung einer oder mehrerer Anwendungen aufweisen, die die Dateneinheiten verarbeiten.

11. Vorrichtung nach Anspruch 10, **dadurch gekennzeichnet, dass** die durch die Vorrichtung verglichenen Eigenschaftsinformationen aus Qualitätsinformationen bestehen, die durch die Server-Vorrichtung für Qualitäts-Bitfelder von OPC-Elementen bestimmt werden.

12. Vorrichtung nach Anspruch 10 oder 11, **dadurch gekennzeichnet, dass** die durch die Vorrichtung verglichenen Eigenschaftsinformationen aus Zeitstempeln der Dateneinheiten bestehen.

13. Prozesssteuerungssystem, das umfasst:
wenigstens eine Client-Vorrichtung nach einem der Ansprüche 10 bis 12,
wenigstens eine Datenquelle,
wenigstens eine Server-Vorrichtung, die Datenübertragung zwischen der Client-Vorrichtung und der Datenquelle ermöglicht, wobei
wenigstens zwei parallele logische Verbindungen für die Client-Vorrichtung zum Übertragen im Wesentlichen der gleichen Daten von wenigstens einer Datenquelle eingerichtet sind.

14. Computerprogramm, das in einen Speicher eines Computers heruntergeladen werden kann, um wenigstens eine Vorrichtung eines Prozesssteuerungssystems zu steuern, wobei das Computerprogramm umfasst:
Computerprogramm-Code zum Einrichten wenigstens zweier paralleler logischer Verbindungen zum Übertragen im Wesentlichen der gleichen Daten zwischen wenigstens einer Datenquelle und der Vorrichtung über wenigstens eine Server-Vorrichtung,
**gekennzeichnet durch**
Computerprogramm-Code zum Prüfen (306) von Eigenschaftsinformationen über Dateneinheiten, die über verschiedene logische Verbindungen übertragen werden,
Computerprogramm-Code zum Vergleichen (307) von Eigenschaftsinformationen über parallele Dateneinheiten, die über verschiedene logische Verbindungen übertragen werden, und
Computerprogramm-Code zum Auswählen (308, 310) von Dateneinheiten, die entsprechend vorgegebener Reihenfolgekriterien die besten Eigenschaftsinformationen für die Nutzung einer oder mehrerer Anwendungen aufweisen, die die Dateneinheiten verarbeiten.

## Revendications

1. Procédé pour organiser la redondance dans un système de contrôle de processus comprenant au moins un dispositif client, au moins une source de données et au moins un dispositif serveur effectuant le transfert de données entre le dispositif client et la source de données, comprenant l'étape suivante à :
organiser, pour le dispositif client, au moins deux connexions logiques parallèles afin de transférer sensiblement les mêmes données entre au moins une source de données et le dispositif client,
**caractérisé par** les étapes suivantes à :
vérifier (306), au niveau du dispositif client, des informations de propriété sur des unités de données transférées par l'intermédiaire de différentes connexions logiques, le dispositif client étant doté de critères d'ordre prédéterminés pour les informations de propriété,
comparer (307), au niveau du dispositif client, des informations de propriété sur les unités de données parallèles transférées par l'intermédiaire de différentes connexions logiques, et
choisir (308, 310) des unités de données fournies par l'intermédiaire de la connexion logique ayant, selon les critères d'ordre prédéterminés, les meilleures informations de propriété pour l'utilisation d'une ou de plusieurs applications de traitement des unités de données.

2. Procédé selon la revendication 1, **caractérisé par** l'organisation des connexions logiques entre le dispositif client et le dispositif serveur selon le standard OPC.

3. Procédé selon la revendication 2, **caractérisé par le fait que** les informations de propriété à comparer consistent en des informations de qualité déterminées par le dispositif serveur pour les champs binaires de qualité d'éléments OPC, et l'utilisation, au niveau du dispositif client, des éléments OPC de la connexion logique dont les informations de qualité indiquent la meilleure qualité.

4. Procédé selon la revendication 3, **caractérisé par** le choix (308) des éléments OPC sur la base des états de qualité dans l'ordre de supériorité suivant, en allant de la meilleure qualité jusqu'à la plus mauvaise qualité : « Bon » → « Incertain » → « Mauvais ».

5. Procédé selon l'une quelconque des revendications 1 à 4, dans lequel les informations de propriété à comparer consistent en des estampilles temporelles des unités de données, et choisissent (310), au niveau du dispositif client, les unités de données de la connexion logique dont les estampilles temporelles sont les plus récentes.

6. Procédé selon la revendication 5, **caractérisé par le fait qu'**il compare d'abord les informations de qualité sur les unités de données, et qu'il compare les estampilles temporelles en réponse aux informations de qualité qui indiquent que différentes unités de données sont de qualité égale.

7. Procédé selon l'une quelconque des revendications 1 à 6, **caractérisé par** :
l'organisation, dans le dispositif client, d'au moins deux applications parallèles de manière à implémenter les connexions parallèles, et
l'utilisation, au niveau du dispositif client, d'une telle application qui utilise une connexion les unités de données transférées par l'intermédiaire de laquelle connexion sont, sur la base des informations de propriété sur les unités de données, les meilleures.

8. Procédé selon l'une quelconque des revendications 1 à 6, **caractérisé par** :
l'organisation, dans le dispositif client, d'au moins deux interfaces clients parallèles de manière à implémenter les connexions parallèles, et
qui sont, sur la base de leurs informations de propriété, les meilleures.

9. Procédé selon l'une quelconque des revendications 1 à 8, **caractérisé par** :
l'organisation des connexions parallèles par l'intermédiaire de différents dispositifs serveurs, et de ce fait par,
la vérification (302) des états de serveur de différents dispositifs serveurs avant de comparer les informations de propriété sur les unités de données, et
la comparaison (308, 310) des informations de propriété seulement sur les unités de données transférées par l'intermédiaire des unités serveurs dont l'état indique que les unités serveurs fonctionnent normalement.

10. Dispositif d'un système de contrôle de processus, comprenant une fonctionnalité de dispositif client afin de communiquer avec au moins un dispositif serveur effectuant un transfert de données dans le système de contrôle de processus entre le dispositif et une source de données, le dispositif est organisé de manière à établir au moins deux connexions logiques parallèles afin de transférer sensiblement les mêmes données à partir d'au moins une source de données,
**caractérisé en ce que** :
le dispositif est agencé de manière à vérifier des informations de propriété sur des unités de données reçues par l'intermédiaire de différentes connexions logiques, le dispositif étant doté de critères d'ordre prédéterminés pour les informations de propriété,
le dispositif est agencé de manière à comparer des informations de propriété sur les unités de données parallèles transférées par l'intermédiaire de différentes connexions logiques, et
le dispositif est agencé de manière à choisir des unités de données fournies par l'intermédiaire de la connexion logique ayant, selon les critères d'ordre prédéterminés, les meilleures informations de propriété pour l'utilisation d'une ou de plusieurs applications de traitement des unités de données.

11. Dispositif selon la revendication 10, **caractérisé en ce que** les informations de propriété comparées par le dispositif consistent en des informations de qualité déterminées par le dispositif serveur pour des champs binaires de qualité d'éléments OPC.

12. Dispositif selon la revendication 10 ou la revendication 11, **caractérisé en ce que** les informations de propriété comparées par le dispositif consistent en des estampilles temporelles des unités de données.

13. Système de contrôle de processus comprenant :
au moins un dispositif client selon l'une quelconque des revendications 10 à 12,
au moins une source de données,
au moins un dispositif serveur effectuant un transfert de données entre le dispositif client et la source de données, dans lequel
au moins deux connexions logiques parallèles sont organisées pour le dispositif client afin de transférer sensiblement les mêmes données à partir d'au moins une source de données.

14. Programme informatique pouvant être téléchargé dans une mémoire d'un ordinateur de manière à contrôler au moins un dispositif d'un système de contrôle de processus, le programme informatique comprenant :
un code de programme informatique pour organiser au moins deux connexions logiques parallèles afin de transférer sensiblement les mêmes données entre au moins une source de données et le dispositif par l'intermédiaire d'au moins un dispositif serveur,
**caractérisé par le fait que** :
le code de programme informatique vérifie (306) les informations de propriété sur des unités de données transférées par l'intermédiaire de différentes connexions logiques,
le code de programme informatique compare (307) les informations de propriété sur des unités de données parallèles transférées par l'intermédiaire de différentes connexions logiques, et
le code de programme informatique choisit (308, 310) des unités de données selon les critères d'ordre prédéterminés, les meilleures informations de propriété pour l'utilisation d'une ou de plusieurs applications de traitement des unités de données.
